# EUROPEAN PATENT APPLICATION

(11) **EP 1 768 343 A2**
(43) Date of publication of application: **28.03.2007**
(21) Application number: 06121167.8
(22) Date of filing: 25.09.2006
(51) Int. Cl.: H04L 29/06

(54) **Method and apparatus for activating alternative virtual private network protocols**

(30) Priority: 26.09.2005 US 234919
(71) Applicant: AT&T Corp., New York, NY 10013-2412 (US)
(72) Inventor: Croak, Marian, Fair Haven, NJ 07704 (US); Eslambolchi, Hossein, Los Altos Hills, CA 94022 (US)
(74) Representative: Harding, Richard Patrick

(57) **Abstract**

A method and apparatus for enabling enterprise customers to detect VPN protocol blocking by access network providers and provides client VPN software with instructions to activate another VPN protocol such as Secure Socket Layer (SSL) that is less likely to be blocked by their provider are disclosed. For instance, if the access network provider blocks the IPSec VPN protocol, the client VPN software will switch to an alternative VPN protocol, such as Secure Socket Layer (SSL) protocol, Layer 2 Tunneling Protocol (L2TP), or Point-to-Point Tunneling Protocol (PPTP), to connect to the VoIP network. The SSL, L2TP, and PPTP protocols are all VPN protocols designed to enable encrypted and authenticated communications across the public Internet.

## Description

The present invention relates generally to communication networks and, more particularly, to a method and apparatus for activating alternative Virtual Private Network (VPN) protocols in accessing communication networks, e.g., packet networks such as Voice over Internet Protocol (VoIP) networks.

### BACKGROUND OF THE INVENTION

For security reasons, remote workers access their corporate sites and VoIP services through VPN tunnels using IP Security (IPSec) VPN protocols. Broadband access network providers will frequently block the IPSec protocol unless users are subscribed to arrangements that frequently charge the subscribers twice the price of regular residential subscriptions with no added value. IPSec is a security protocol defined by the IETF (Internet Engineering Task Force) that provides authentication and encryption over the public Internet. A VPN protocol is designed to enable encrypted and authenticated communications across the public Internet.

Therefore, a need exists for a method and apparatus for activating alternative Virtual Private Network (VPN) protocols in accessing a packet network, e.g., a VoIP network.

### SUMMARY OF THE INVENTION

In one embodiment, the present invention enables enterprise customers to detect VPN protocol blocking by access network providers and provides client VPN software with instructions to activate another VPN protocol such as Secure Socket Layer (SSL) that is less likely to be blocked by their provider. For instance, if the access network provider blocks the IPSec VPN protocol, the client VPN software will switch to an alternative VPN protocol, such as Secure Socket Layer (SSL) protocol, Layer 2 Tunneling Protocol (L2TP), or Point-to-Point Tunneling Protocol (PPTP) and the like, to connect to the VoIP network. The SSL, L2TP, and PPTP protocols are all VPN protocols designed to enable encrypted and authenticated communications across the public Internet.

### BRIEF DESCRIPTION OF THE DRAWINGS

The teaching of the present invention can be readily understood by considering the following detailed description in conjunction with the accompanying drawings, in which:

FIG. 1 illustrates an exemplary Voice over Internet Protocol (VoIP) network related to the present invention;

FIG. 2 illustrates an example of using Virtual Private Network (VPN) protocols in a VolP network related to the present invention;

FIG. 3 illustrates a flowchart of a method for activating alternative Virtual Private Network (VPN) protocols in a VoIP network of the present invention; and

FIG. 4 illustrates a high level block diagram of a general purpose computer suitable for use in performing the functions described herein.

To facilitate understanding, identical reference numerals have been used, where possible, to designate identical elements that are common to the figures.

### DETAILED DESCRIPTION

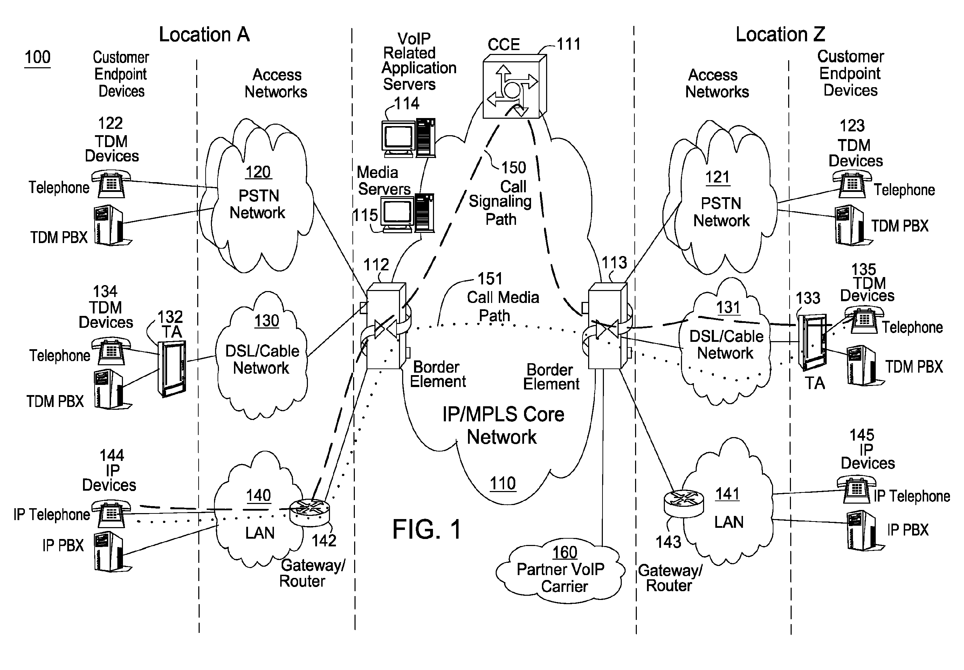

To better understand the present invention, FIG. 1 illustrates a communication architecture 100 having an example network, e.g., a packet network such as a VoIP network related to the present invention. Exemplary packet networks include internet protocol (IP) networks, asynchronous transfer mode (ATM) networks, frame-relay networks, and the like. An IP network is broadly defined as a network that uses Internet Protocol to exchange data packets. Thus, a VoIP network or a SoIP (Service over Internet Protocol) network is considered an IP network.

In one embodiment, the VoIP network may comprise various types of customer endpoint devices connected via various types of access networks to a carrier (a service provider) VolP core infrastructure over an Internet Protocol/Multi-Protocol Label Switching (IP/MPLS) based core backbone network. Broadly defined, a VolP network is a network that is capable of carrying voice signals as packetized data over an IP network. The present invention is described below in the context of an illustrative VolP network. Thus, the present invention should not be interpreted to be limited by this particular illustrative architecture.

The customer endpoint devices can be either Time Division Multiplexing (TDM) based or IP based. TDM based customer endpoint devices 122, 123, 134, and 135 typically comprise of TDM phones or Private Branch Exchange (PBX). IP based customer endpoint devices 144 and145 typically comprise IP phones or IP PBX. The Terminal Adaptors (TA) 132 and 133 are used to provide necessary interworking functions between TDM customer endpoint devices, such as analog phones, and packet based access network technologies, such as Digital Subscriber Loop (DSL) or Cable broadband access networks. TDM based customer endpoint devices access VoIP services by using either a Public Switched Telephone Network (PSTN) 120, 121 or a broadband access network via a TA 132 or 133. IP based customer endpoint devices access VoIP services by using a Local Area Network (LAN) 140 and 141 with a VolP gateway or router 142 and 143, respectively.

The access networks can be either TDM or packet based. A TDM PSTN 120 or 121 is used to support TDM customer endpoint devices connected via traditional phone lines. A packet based access network, such as Frame Relay, ATM, Ethernet or IP, is used to support IP based customer endpoint devices via a customer LAN, e.g., 140 with a VoIP gateway and router 142. A packet based access network 130 or 131, such as DSL or Cable, when used together with a TA 132 or 133, is used to support TDM based customer endpoint devices.

The core VolP infrastructure comprises of several key VolP components, such the Border Element (BE) 112 and 113, the Call Control Element (CCE) 111, and VolP related servers 114. The BE resides at the edge of the VoIP core infrastructure and interfaces with customers endpoints over various types of access networks. A BE is typically implemented as a Media Gateway and performs signaling, media control, security, and call admission control and related functions. The CCE resides within the VoIP infrastructure and is connected to the BEs using the Session Initiation Protocol (SIP) over the underlying IP/MPLS based core backbone network 110. The CCE is typically implemented as a Media Gateway Controller or a softswitch and performs network wide call control related functions as well as interacts with the appropriate VoIP service related servers when necessary. The CCE functions as a SIP back-to-back user agent and is a signaling endpoint for all call legs between all BEs and the CCE. The CCE may need to interact with various VoIP related servers in order to complete a call that require certain service specific features, e.g. translation of an E.164 voice network address into an IP address.

For calls that originate or terminate in a different carrier, they can be handled through the PSTN 120 and 121 or the Partner IP Carrier 160 interconnections. For originating or terminating TDM calls, they can be handled via existing PSTN interconnections to the other carrier. For originating or terminating VoIP calls, they can be handled via the Partner IP carrier interface 160 to the other carrier.

In order to illustrate how the different components operate to support a VolP call, the following call scenario is used to illustrate how a VolP call is setup between two customer endpoints. A customer using IP device 144 at location A places a call to another customer at location Z using TDM device 135. During the call setup, a setup signaling message is sent from IP device 144, through the LAN 140, the VolP Gateway/Router 142, and the associated packet based access network, to BE 112. BE 112 will then send a setup signaling message, such as a SIP-INVITE message if SIP is used, to CCE 111. CCE 111 looks at the called party information and queries the necessary VolP service related server 114 to obtain the information to complete this call. If BE 113 needs to be involved in completing the call; CCE 111 sends another call setup message, such as a SIP-INVITE message if SIP is used, to BE 113. Upon receiving the call setup message, BE 113 forwards the call setup message, via broadband network 131, to TA 133. TA 133 then identifies the appropriate TDM device 135 and rings that device. Once the call is accepted at location Z by the called party, a call acknowledgement signaling message, such as a SIP-ACK message if SIP is used, is sent in the reverse direction back to the CCE 111. After the CCE 111 receives the call acknowledgement message, it will then send a call acknowledgement signaling message, such as a SIP-ACK message if SIP is used, toward the calling party. In addition, the CCE 111 also provides the necessary information of the call to both BE 112 and BE 113 so that the call data exchange can proceed directly between BE 112 and BE 113. The call signaling path 150 and the call media path 151 are illustratively shown in FIG. 1. Note that the call signaling path and the call media path are different because once a call has been setup up between two endpoints, the CCE 111 does not need to be in the data path for actual direct data exchange.

Media Servers (MS) 115 are special servers that typically handle and terminate media streams, and to provide services such as announcements, bridges, transcoding, and Interactive Voice Response (IVR) messages for VolP service applications.

Note that a customer in location A using any endpoint device type with its associated access network type can communicate with another customer in location Z using any endpoint device type with its associated network type as well. For instance, a customer at location A using IP customer endpoint device 144 with packet based access network 140 can call another customer at location Z using TDM endpoint device 123 with PSTN access network 121. The BEs 112 and 113 are responsible for the necessary signaling protocol translation, e.g., SS7 to and from SIP, and media format conversion, such as TDM voice format to and from IP based packet voice format.

For security reasons, remote workers access their corporate sites and VoIP services through VPN tunnels using IP Security (IPSec) VPN protocols. Broadband access network providers will frequently block the IPSec protocol unless users are subscribed to arrangements that frequently charge the subscribers twice the price of regular residential subscriptions with no added value. When a particular VPN protocol is blocked by an access network provider, subscribers need to be aware of it and then switch to a different VPN protocol that is not blocked by the access network provider. IPSec is a security protocol defined by the IETF (Internet Engineering Task Force) that provides authentication and encryption over the public Internet. A VPN protocol is designed to enable encrypted and authenticated communications across the public Internet.

To address this criticality, the present invention enables enterprise customers to detect VPN protocol blocking by access network providers and provides client VPN software with instructions to activate another VPN protocol such as Secure Socket Layer (SSL) that is less likely to be blocked by their provider. For instance, if the access network provider blocks the IPSec VPN protocol, the client VPN software will switch to an alternative VPN protocol, such as Secure Socket Layer (SSL) protocol, Layer 2 Tunneling Protocol (L2TP), or Point-to-Point Tunneling Protocol (PPTP) and the like, to connect to the VoIP network. The SSL, L2TP, and PPTP protocols are all VPN protocols designed to enable encrypted and authenticated communications across the public Internet.

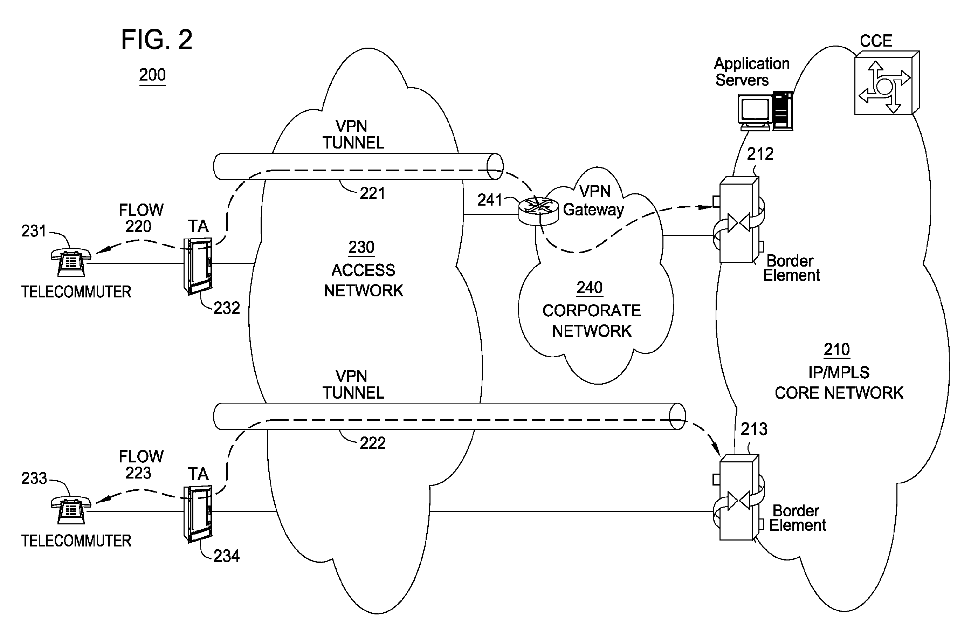

FIG. 2 illustrates an exemplary communication architecture 200 for using Virtual Private Network (VPN) protocols in a packet network, e.g., a VoIP network related to the present invention. In FIG. 2, in one embodiment of the present invention, telecommuter 231 via TA 232 remotely accesses corporate network 240 to perform work related activities, including using VoIP services subscribed by the corporation. Telecommuter 231 uses VPN protocol via VPN tunnel 221 to securely access corporate network 240 through VPN Gateway 241. VPN tunnel 221 provides secured communication between telecommuter 231 and VPN Gateway 241 over the public internet access network 230 (e.g., an Internet Protocol (IP) network). In FIG. 2, telecommuter 231 uses the VolP services subscribed by the corporation via signaling flow 220. In on embodiment, BE 212 can actively detects and determines the VPN protocols blocked by access network 230. Common VPN protocol used are, but not limited to, IPSec, SSL, PPTP, and L2TP protocols. If BE 212 has determined that access network 230 is blocking the IPSec protocol, BE 212 will signal the VPN client software used by telecommuter 231 to use an alternative protocol, such as SSL, that is not blocked by access network 230. Using the SSL protocol, telecommuter can then connect to corporate network 240, using the uninterrupted signaling 220, to access the subscribed VoIP services. If SSL is also blocked, BE 212 can attempt to use other available VPN protocols, such as L2TP or PPTP, to communicate with telecommuter 231.

In FIG. 2, in another embodiment of the present invention, telecommuter 233 via TA 234 uses VPN protocol via VPN tunnel 222 over access network 230 to securely access VoIP services subscribed by the corporation that telecommuter 233 works for. VPN tunnel 222 provides secured communication between telecommuter 233 and VoIP network 210 over the public internet access network 230. In FIG. 2, telecommuter 233 uses the VoIP services subscribed by the corporation via signaling flow 223. BE 213 can actively detects and determines the VPN protocols blocked by access network 230. Common VPN protocol used are, but not limited to, IPSec, SSL, PPTP, and L2TP protocols. If BE 213 has determined that access network 230 is blocking the IPSec protocol, BE 213 will signal the VPN client software used by telecommuter 233 to use an alternative protocol, such as SSL, that is not blocked by access network 230. Using the SSL protocol, telecommuter can then connect to the VoIP network, using the uninterrupted signaling 223, to access the subscribed VoIP services. If SSL is also blocked, BE 213 can attempt to use other available VPN protocols, such as L2TP or PPTP, to communicate with telecommuter 233.

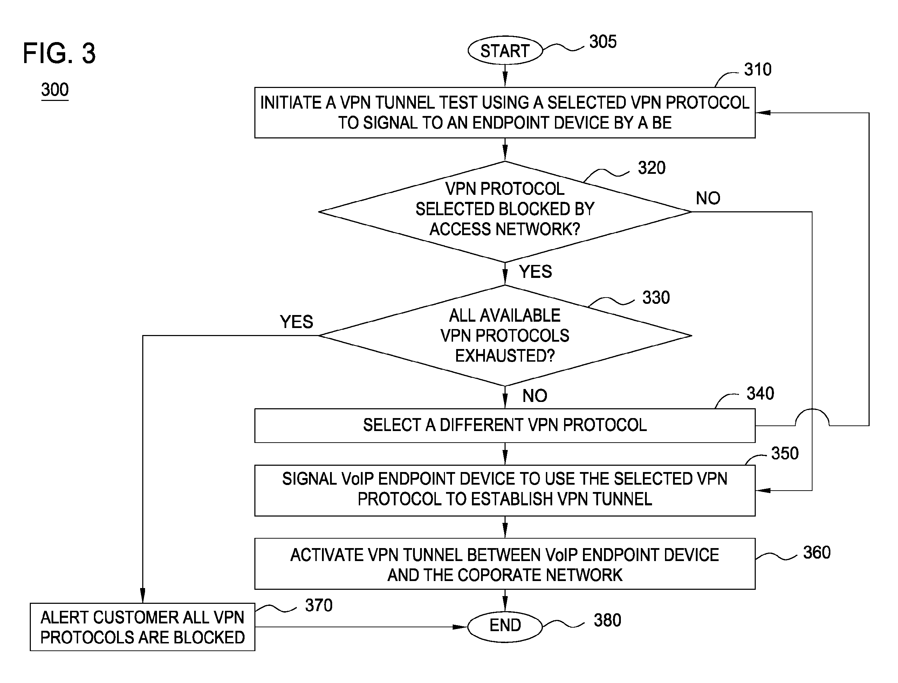

FIG. 3 illustrates a flowchart of a method 300 for activating alternative Virtual Private Network (VPN) protocols in a packet network, e.g., VoIP network of the present invention. Method 300 starts in step 305 and proceeds to step 310.

In step 310, the method attempts to initiate a VPN tunnel test using a selected VPN protocol to signal to an endpoint device by a BE. For example, the testing may start when an endpoint device signals that it wants to establish secured communication.

In step 320, the method checks if the selected VPN protocol is blocked by the access network. If the selected VPN protocol is blocked by the access network, the method proceeds to step 330; otherwise, the method proceeds to step 350. Available VPN protocols that can be selected include, but are not limited to, IPSec, SSL, L2TP, and PPTP protocols.

In step 330, the method checks if all available VPN protocols have been tested against the access network. If all available VPN protocols have been exhausted, the method proceeds to step 370; otherwise, the method proceeds to step 340.

In step 340, the method selects the next available VPN protocol and proceeds back to step 310.

In step 350, the method signals to the VolP endpoint device to use the selected VPN protocol to establish a VPN tunnel. Namely, a VPN protocol has been detected that is not being blocked.

In step 360, the method activates a VPN tunnel between VoIP endpoint device and the corporate network.

In step 370, the method alerts the customer that all available VPN protocols are blocked by the access network. The method ends in step 380.

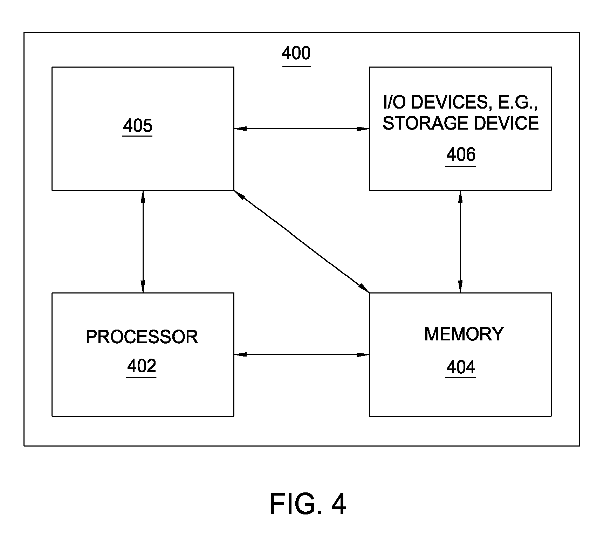

FIG. 4 depicts a high level block diagram of a general purpose computer suitable for use in performing the functions described herein. As depicted in FIG. 4, the system 400 comprises a processor element 402 (e.g., a CPU), a memory 404, e.g., random access memory (RAM) and/or read only memory (ROM), a module 405 for activating alternative VPN protocols, and various input/output devices 406 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, the present module or process 405 for activating alternative VPN protocols can be loaded into memory 404 and executed by processor 402 to implement the functions as discussed above. As such, the present process 405 for activating alternative VPN protocols (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

## Claims

1. A method for selecting a Virtual Private Network, VPN, protocol in accessing a communication network, comprising:
testing a first VPN protocol from a plurality of available VPN protocols to signal to an endpoint device by an edge component of said communication network over an access network; and
selecting an alternative VPN protocol from said plurality of available VPN protocols to signal to said endpoint device by said edge component of said communication network over said access network if said first VPN protocol is blocked by said access network.

2. The method of claim 1, wherein said communication network is a Voice over Internet Protocol, VoIP, network or a Service over Internet Protocol, SoIP network.

3. The method of claim 1 or 2, wherein said access network is an Internet Protocol, IP, network.

4. The method of claim 1, 2 or 3, wherein said edge component is a Border Element, BE.

5. The method of any one of the preceding claims, wherein said plurality of available VPN protocols comprise at least two of: an IP Security, IPSec, protocol, a Secure Socket Layer, SSL, protocol, a Layer 2 Tunneling Protocol, L2TP, or a Point-to-Point Tunneling Protocol, PPTP, protocol.

6. The method of any one of the preceding claims, further comprising:
using said alternative VPN protocol to establish a VPN tunnel over said access network to said endpoint device if said alternative VPN protocol is not blocked by said access network.

7. The method of any one of the preceding claims, further comprising:
sending a notification to a network administrator of said endpoint device if all of said plurality of VPN protocols are blocked by said access network.

8. A computer-readable medium having stored thereon a plurality of instructions, the plurality of instructions including instructions which, when executed by a processor, cause the processor to perform the steps of a method for selecting a Virtual Private Network, VPN, protocol in accessing a communication network, comprising:
testing a first VPN protocol from a plurality of available VPN protocols to signal to an endpoint device by an edge component of said communication network over an access network; and
selecting an alternative VPN protocol from said plurality of available VPN protocols to signal to said endpoint device by said edge component of said communication network over said access network if said first VPN protocol is blocked by said access network.

9. The computer-readable medium of claim 8, wherein said communication network is a Voice over Internet Protocol, VoIP, network or a Service over Internet Protocol, SoIP, network.

10. The computer-readable medium of claim 8 or 9, wherein said access network is an Internet Protocol, IP, network.

11. The computer-readable medium of claim 8, 9 or 10, wherein said edge component is a Border Element, BE.

12. The computer-readable medium of any one of claims 8 to 11, wherein said plurality of available VPN protocols comprise at least two of: an IP Security, IPSec, protocol, a Secure Socket Layer, SSL, protocol, a Layer 2 Tunneling Protocol, L2TP, or a Point-to-Point Tunneling Protocol, PPTP, protocol.

13. The computer-readable medium of any one of claims 8 to 12, further comprising:
using said alternative VPN protocol to establish a VPN tunnel over said access network to said endpoint device if said alternative VPN protocol is not blocked by said access network.

14. The computer-readable medium of any one of claims 8 to 13, further comprising:
sending a notification to a network administrator of said endpoint device if all of said plurality of VPN protocols are blocked by said access network.

15. An apparatus for selecting a Virtual Private Network, VPN, protocol in accessing a communication network, comprising:
means for testing a first VPN protocol from a plurality of available VPN protocols to signal to an endpoint device by an edge component of said communication network over an access network; and
means for selecting an alternative VPN protocol from said plurality of available VPN protocols to signal to said endpoint device by said edge component of said communication network over said access network if said first VPN protocol is blocked by said access network.

16. The apparatus of claim 15, wherein said communication network is a Voice over Internet Protocol, VoIP, network or a Service over Internet Protocol, SoIP, network.

17. The apparatus of claim 15 or 16, wherein said access network is an Internet Protocol, IP, network.

18. The apparatus of claim 15, 16 or 17, wherein said edge component is a Border Element, BE.

19. The apparatus of any one of claims 15 to 18, wherein said plurality of available VPN protocols comprise at least two of: an IP Security, IPSec, protocol, a Secure Socket Layer, SSL, protocol, a Layer 2 Tunneling Protocol, L2TP, or a Point-to-Point Tunneling Protocol, PPTP, protocol.

20. The apparatus of any one of claims 15 to 19, further comprising:
means for using said alternative VPN protocol to establish a VPN tunnel over said access network to said endpoint device if said alternative VPN protocol is not blocked by said access network.
